# EUROPÄISCHE PATENTANMELDUNG

(11) **EP 3 015 432 A1**
(43) Veröffentlichungstag der Anmeldung: **04.05.2016**
(21) Anmeldenummer: 14003669.0
(22) Anmeldetag: 30.10.2014
(51) Int. Cl.: C02F 1/02, C02F 11/18, C05F 7/00, C05F 17/00

(54) **Verfahren und Vorrichtung zur Behandlung von organischer Masse mit Faulschlamm-Rückführung**

(71) Anmelder: Eliquo Stulz GmbH, 61352 Bad Homburg v.d. Höhe (DE)
(72) Erfinder: Knörle, Ulrich, 88289 Waldburg (DE); Buchmüller, Marianne, Dr., 79777 Ühlingen-Birkendorf (DE)
(74) Vertreter: Grünecker Patent- und Rechtsanwälte PartG mbB

(57) **Zusammenfassung**

Die vorliegende Erfindung betrifft ein Verfahren zur Behandlung von organischer Masse, insbesondere Klärschlamm, wobei die organische Masse zunächst einer Desintegrationsanlage 4 zugeführt wird. Dann erfolgt eine thermische Hydrolyse der organischen Masse in der Desintegrationsanlage 4. Die hydrolysierte organische Masse wird einem Faulbehälter 5 zugeführt, in dem die organische Masse wenigstens teilweise ausfault, wobei wenigstens ein Teil der wenigstens teilweise ausgefaulten organischen Masse durch eine Rückführungsleitung 7 vor die Desintegrationsanlage 4 zurückgeführt wird. Die Erfindung betrifft weiterhin eine Vorrichtung zur Behandlung von organischer Masse, insbesondere Klärschlamm, mit einer Desintegrationsanlage 4, einem davon stromabwärts angeordneten Faulbehälter 5, und einer Rückführungsleitung 7 für wenigstens teilweise ausgefaulte organische Masse, wobei die Rückführungsleitung 7 sich von stromabwärts des Faulbehälters 5 bis stromaufwärts der thermischen Desintegrationsanlage 4 erstreckt.

## Beschreibung

Die vorliegende Erfindung bezieht sich auf ein Verfahren zur Behandlung von organischer Masse, insbesondere Klärschlamm, das das Zuführen der organischen Masse zu einer Desintegrationsanlage, die thermische Hydrolyse der organischen Masse in der Desintegrationsanlage, und das Zuführen der hydrolysierten organischen Masse zu einem Faulbehälter umfasst, in dem die organische Masse wenigstens teilweise ausfault. Die Erfindung betrifft weiterhin eine Vorrichtung zur Behandlung von organischer Masse, insbesondere Klärschlamm, die eine Desintegrationsanlage und einen davon stromabwärts angeordneten Faulbehälter umfasst.

Bei der Reinigung von kommunalem und gewerblichem Abwasser mittels mechanischbiologischer Verfahren fallen Klärschlämme an, die entsorgt bzw. in den Stoffkreislauf zurückgeführt werden müssen. Dabei kann durch die Schlammfaulung als Standardverfahren der biologischen Schlammstabilisierung eine deutliche Reduzierung der Schlammtrockenmasse erreicht werden. Neben dem Gewinn verwertbaren Klärgases ergeben sich durch die Reduzierung der zu entsorgenden Schlammtrockenmasse wirtschaftliche Vorteile für den Kläranlagenbetrieb. Dabei bleibt die Umsetzung der organischen Substanzen von belebten Schlämmen jedoch in der Regel auf 25 bis 30% beschränkt, da diese zum größten Teil aus schwer abbaubarer organischer Zellsubstanz bestehen.

Aus der WO 2007/117152 A1 ist ein Verfahren zur Herstellung von Biogas bekannt, wobei darin eine Erwärmung von organischer Masse in einem Faultank mittels einer Zirkulierung über einen Wärmetauscher offenbart wird. In einer Entwässerungsvorrichtung wird Dünger gewonnen, wobei Teile des dehydrierten Restes oder der flüssige Rest zurückgeführt werden können.

Im Stand der Technik werden teilweise zur Zerstörung der im Klärschlamm enthaltenen Zellsubstanz Desintegrationsanlagen vorgesehen, durch die der Abbaugrad und der Gasertrag deutlich erhöht und die zu entsorgende Schlammtrockenmasse verringert werden kann.

Die Klärschlammdesintegration wird im Stand der Technik als die Zerkleinerung von Klärschlämmen durch die Einwirkung äußerer Kräfte (physikalisch, chemisch, biologisch) definiert. Sie führt von der Auflösung der Flockenstruktur bis zum Aufschluss der im Schlamm enthaltene Mikroorganismen und Partikel. Damit umfasst die Klärschlammdesintegration auch die Hydrolyse von Klärschlamm, wobei diese Begriffe im Stand der Technik und im Nachfolgenden oftmals synonym verwendet werden.

Eine Vorrichtung und ein Verfahren gemäß Oberbegriff sind beispielsweise aus der EP 2 233 442 A1, bekannt. Darin wird weiterhin offenbart, dass eine Rückführungsleitung und ein Rückführventil vorgesehen sind, durch die zum Ausgleich von eventuell diskontinuierlich anfallender anfänglicher Mengen der organischen Masse zumindest ein Teil der organischen Masse direkt nach der Hydrolyse zurückgeführt werden kann, und so ein kontinuierlicher Betrieb der Anlage aufrecht erhalten werden kann. Zudem ermöglicht diese Rückführungsleitung, dass eine Reinigungsflüssigkeit durch die Anlage im Kreis gefahren werden kann, um damit eventuelle Verkrustungen durch die organische Masse in der Anlage zu entfernen.

Die EP 0 996 595 B1 offenbart ein Verfahren zur Behandlung biogener Restmassen, in dem ein durch heißes Thermalöl beheizter Reaktor zur Temperatur-Druck-Hydrolyse vorgesehen ist, wobei die den Reaktor verlassende Suspension über eine Strippkolonne und eine Einrichtung zum Abziehen von Hydrolysegas einem Fermenter zugeführt wird. Das entstehende Trübwasser kann zur Herstellung neuer Suspension einem Anmaischbehälter zugeführt werden, wobei mittels eines statischen Eindickers der Feststoffgehalt im Trübwasser weiter reduziert werden kann.

Aus der EP 1 150 924 B1 und der DE 198 58 187 C5 sind Verfahren und Vorrichtungen zur Reduzierung der organischen Anteile eines ausfaulbaren Substrates bekannt. In einer Ausführungsform wird Überschussschlamm zunächst einem Faulturm zugeführt. Mittels einer Leitung wird dann Schlamm aus dem Faulturm entnommen und über einen Eindicker und einen Wärmetauscher zur thermischen Desintegration wieder dem Faulturm zugeführt.

In der DE 10 2007 037 202 A1 wird ein Verfahren zur Konversion von Biomasse zu Biogas in anaeroben Fermentern offenbart, wobei nach einem ersten Fermenter der Gärrest einer Fest-Flüssig-Phasentrennung unterzogen wird, und die abgetrennte Feststoffphase einer Thermodruckhydrolyse zugeführt wird, bevor sie entweder in den ersten Fermenter-Reaktor zurückgeführt oder einem zweiten Fermenter-Reaktor zugeführt wird. Vor dem Faulbehälter ist ein mittels Dampf betriebenes thermisches Hydrolysemittel vorgesehen.

Wenn bei Klärschlammbehandlungsvorrichtungen mit vorgeschalteter Hydrolyseanlage bzw. Desintegrationsanlage eine Schlammbehandlungskomponente stromaufwärts der Hydrolyseanlage, beispielsweise ein Eindicker, ausfällt oder gewartet werden muss, wird in dieser Zeit der Hydrolyseanlage keine organische Masse, z.B. Dickschlamm, mehr zugeführt. Folglich müsste die Hydrolyseanlage abgeschaltet werden. Dies ist aber nachteilig, da das Wiederanfahren der Hydrolyseanlage aus dem kalten Zustand heraus sehr lange dauern kann, beispielsweise bis zu 16 Stunden. Deswegen kann ein Speicher für die organische Masse vor der Hydrolyseanlage vorgesehen wird, der so viel organische Masse puffert, dass auch bei einem längeren Ausfall einer stromaufwärtigen Komponente genügend organische Masse für den Betrieb der Hydrolyseanlage vorgehalten wird, und erst danach im Extremfall die Hydrolyseanlage geregelt heruntergefahren werden muss.

Ein solcher Speicherbehälter ist aber teuer und erfordert viel Platz. Bei einer angenommen Speicherzeit von einem Tag bei einer mittelgroßen Kläranlage mit einer Reinigungskapazität von 200000 Einwohnergleichwerten hätte solch ein Speicherbehälter eine Größe von ca. 120 m³ (Kubikmeter).

Es ist somit die Aufgabe der Erfindung ein Verfahren und eine Vorrichtung zur Behandlung von organischer Masse bereitzustellen, mittels denen die Effizienz und die Betriebssicherheit kosteneffizient verbessert werden.

Dies wird erreicht durch ein Verfahren zur Behandlung von organischer Masse, insbesondere Klärschlamm, wobei zunächst die frisch zugeführte organische Masse, d.h. insbesondere Überschussschlamm bzw. Frischschlamm, zu einer Desintegrationsanlage zugeführt wird, dann eine thermische Hydrolyse der organischen Masse in der Desintegrationsanlage erfolgt, daraufhin die hydrolysierte organische Masse, d.h. insbesondere hydrolysierter Frischschlamm bzw. Hydrolysat, einem Faulbehälter zugeführt wird, in dem die organische Masse wenigstens teilweise ausfault, und schließlich wenigstens ein Teil der wenigstens teilweise ausgefaulten organischen Masse, d.h. insbesondere Faulschlamm, durch eine Rückführungsleitung vor die Desintegrationsanlage zurückgeführt wird.

In manchen Ausführungsformen bzw. Betriebszuständen kann die gesamte wenigstens teilweise ausgefaulte organische Masse durch eine Rückführungsleitung vor die Desintegrationsanlage zurückgeführt werden, während durch den normalen Abfluss des Faulbehälters keine ausgefaulte organische Masse entnommen wird. Insbesondere kann die rückgeführte organische Masse auch schon vollständig ausgefault sein.

Die Rückführung wenigstens eines Teils der wenigstens teilweise ausgefaulten organischen Masse durch eine direkte Rückführungsleitung vor die Desintegrationsanlage ermöglicht, dass zur Aufrechterhaltung der Strömungsgeschwindigkeit in der Desintegrationsanlage fehlende oder auch schwankende Mengen ausgeglichen werden können. Somit können die gewünschten Bedingungen in der Desintegrationsanlage aufrecht erhalten werden, und damit ein Herunterfahren der Desintegrationsanlage bzw. das Entstehen von ungewünschten Bedingungen, die beispielsweise zur Anbrand führen können, verhindert werden.

Würde nur die im Stand der Technik teilweise vorgesehene Rückführung der hydrolysierten organischen Masse direkt nach der Desintegrationsanlage erfolgen, käme es zu einem Aufschaukeln der Temperatur in der Desintegrationsanlage, und damit innerhalb kürzester Zeit zu unzulässigen Betriebstemperaturen in der Desintegrationsanlage oder in anderen Komponenten des entsprechenden Kreislaufs, beispielsweise in der Zuführpumpe. Eine auch nur sehr kurzfristige ausschließliche Rückführung von Hydrolysat, d.h. von hydrolysierter organischer Masse stromaufwärts des Faulbehälters, auf die Eingangsseite der Desintegrationsanlage kann zu deren Notabschaltung führen. Dahingegen dient der Faulbehälter erfindungsgemäß als Wärmepuffer im Rückführungskreislauf, sodass das Aufschaukeln der Temperaturen verhindert werden kann. Die erfindungsgemäße Rückführung von wenigstens teilweise ausgefaulter organischer Masse aus dem Faulbehälter ermöglicht somit eine Limitierung der Eingangstemperaturen, die insbesondere die der Desintegrationsanlage vorgeordnete Schlammpumpe schützt.

Folglich kann erfindungsgemäß eine vorteilhafte Entkopplung des Betriebs der Desintegrationsanlage von vorgeschalteten Komponenten, d.h. Aggregaten und/oder Anlagenteilen, erreicht werden.

Durch die Rückführung der wenigstens teilweise ausgefaulten organischen Masse aus dem Faulbehälter kann auch vermieden werden, dass ein Ausgleich von fehlenden Mengen der organischen Masse für die thermische Hydrolyse durch Wasser erfolgen muss. Die Zufuhr von Wasser würde die Desintegrationsanlage, aber auch alle nachfolgenden Behandlungskomponenten in ihrer Effizienz beeinträchtigen und die Betriebskosten der Anlage erhöhen. So führt ein hoher Eintrag von Wasser im nachgeschalteten Faulbehälter zu einer Verdünnung dessen Inhaltes mit der Folge, dass das vorzuhaltende Faulbehältervolumen aufgrund der Notwendigkeit zur Einhaltung einer hydraulischen Mindest-Aufenthaltszeit deutlich ansteigt, was wiederum dem Ziel einer Effizienzsteigerung der Faulung durch Einsatz der Desintegration entgegen steht.

Der Faulbehälter ist insbesondere ein Faulturm. Der Faulbehälter hat vorteilhafterweise ein Volumen von 1000 Kubikmeter bis 5000 Kubikmeter, und damit hat der Faulbehälter sowie die darin vorgehaltene organische Masse eine erhebliche Wärmekapazität.

Im Faulturm wird vorteilhafterweise anaerobe Schlammfaulung im mesophilen Temperaturbereich bei 35°C (Celsius) bis 38°C betrieben. Alternativ kann aber auch eine Faulung im thermophilen Bereich bei ca. 48°C bis 55°C betrieben werden, wobei dabei dem Vorteil des teilweise beobachteten höheren Abbaus der organischen Substanz der Nachteil eines labileren Prozesses gegenüber steht.

Der anaerobe Abbau organischer Substanz vollzieht sich in vier Phasen bis zu den Endprodukten Wasser, Methan, Kohlendioxid. In der einleitenden Hydrolysephase werden polymere Substanzen durch Exoenzyme in niedermolekulare gelöste Bestandteile gespalten. Im zweiten Schritt werden in der Versäuerungsphase - auch Acidogenese genannt - die monomeren und oligomeren Bestandteile zu reduzierten organischen Verbindungen wie z.B. Fettsäuren, Aminosäuren und Alkoholen sowie Kohlendioxid und Wasserstoff abgebaut. Nur ein Teil der gebildeten Produkte (Acetat, Kohlendioxid und Wasserstoff) kann durch methanogene Bakterien direkt verwertet werden. Die restlichen Fermentationsprodukte müssen durch acidogene Bakterien, die in enger Symbiose mit methanogenen Bakterien stehen, zu Acetat umgewandelt werden.

Die Geschwindigkeit des gesamten anaeroben Abbauprozesses wird durch den langsamsten Einzelprozess limitiert. Im Fall von komplexen Verbindungen, wie bei Klärschlamm, ist der limitierende Faktor die biologische Hydrolyse. Durch die vorgeschaltete Desintegration wird die biologische Hydrolyse durch die Einwirkung äußerer Kräfte bzw. Temperatur unterstützt. Sichtbar wird dies durch eine Erhöhung der Gasausbeute, einen höheren Abbaugrad der organischen Substanzen, und damit einhergehend eine Verminderung der Klärschlammmenge. Darüber hinaus wird in aller Regel auch eine Verbesserung des Entwässerungsverhaltens, der Bekämpfung von Schwimmschlamm und Schaum in der Faulung sowie eine erhöhte Freisetzung von Nährstoffen für deren Rückgewinnung erreicht.

In einer Ausführungsform des Verfahrens wird die Rückführung so geregelt, dass ein vorgegebener Durchfluss in der Desintegrationsanlage erreicht wird, sodass insbesondere ein statischer Betriebszustand in der Desintegrationsanlage vorliegt. Der vorgegebene Durchfluss kann in Abhängigkeit der Heizleistung der Desintegrationsanlage und/oder der Viskosität und/oder des Feststoffgehalts der organischen Masse geregelt werden. Somit kann unabhängig vom Durchsatz in der Gesamtanlage eine optimale Durchströmung der Wärmetauscher unter Berücksichtigung des Eingangsdruckes bzw. des Druckverlustes innerhalb der Wärmetauscher erreicht werden. Vorteilhafterweise wird die Rückführung aktiv im Normalbetrieb der Desintegrationsanlage zur Aufrechthaltung eines statischen Betriebszustandes in der Desintegrationsanlage, und insbesondere in den darin vorliegenden Wärmetauschern, eingesetzt. Als statischer Betriebszustand ist ein Betriebszustand mit einem im Wesentlichen gleichbleibenden Durchfluss zu verstehen, unabhängig vom externen Zufluss zur Anlage. Dieser statische Betriebszustand kann insbesondere auch bei einem Ausfall einer stromaufwärtigen Behandlungskomponente, wie beispielsweise eines Eindickers, aufrechterhalten werden.

Insbesondere weist der Durchfluss in der Desintegrationsanlage eine Strömungsgeschwindigkeit von 0,4 Meter pro Sekunde bis 1,5 Meter pro Sekunde auf. Damit kann die Gefahr von Anbrand an den heißen Wandungen auf der Schlammseite der Wärmetauscher signifikant reduziert werden, da sich bei diesen Strömungsgeschwindigkeiten vorteilhafte Strömungsformen ausbilden. Bei den vorgenannten Strömungsgeschwindigkeiten liegen zudem beherrschbare Druckverluste vor. Durch die Reduzierung der Gefahr von Anbrand können hinreichend lange Standzeiten der Anlage erreicht werden, und insbesondere kann die Standzeit zwischen Spül- bzw. Reinigungsintervallen erhöht werden. Die Gefahr von Anbrand wird vornehmlich durch eine Mindestströmungsgeschwindigkeit von 0,4 Meter pro Sekunde reduziert. Die Strömungsgeschwindigkeit wird aber vorteilhafterweise auch durch den vorgenannten Maximalwert limitiert. Wenn die behandelnde Schlammmenge dennoch erhöht werden soll, können insbesondere mehrere parallele Desintegrationsanlagen vorgesehen werden.

Die thermische Hydrolyse von organischer Masse, insbesondere organischen Schlämmen, wird insbesondere in einem Temperaturbereich von ca. 60°C bis 170°C durchgeführt.

In einer bevorzugten Ausführungsform wird eine hochthermische Hydrolyse bei Temperaturen über 100°C durchgeführt. Insbesondere wird bei diesem Verfahren unter Anwendung eines ausschließlich indirekten Wärmeaustausches zwischen Heizmedium und der organischen Masse eine Desintegration kontinuierlich durchgeführt. Die damit erhöhten Risiken bezüglich Anbrand und die damit einhergehenden geringeren Standzeiten beim Einsatz von hochthermischer Desintegration im Stand der Technik können durch die Rückführung wenigstens eines Teils der wenigstens teilweise ausgefaulten organischen Masse aus dem Faulbehälter signifikant reduziert werden.

Weitergehend vorteilhafte Effekte können in einem Temperaturbereich von ca. 140°C bis 170°C erreicht werden, wie z.B. weitergehend erhöhte Gaserträge, höherer Abbau der organischen Substanz, signifikante Verringerung der Viskosität sowie verbesserte Entwässerungseigenschaften.

Eine thermische Hydrolyse bei Temperaturen von über 100°C erfordert gewöhnlich eine entsprechende Druckhaltung, sodass der Druck im gesamten Wärmetauschersystem immer deutlich oberhalb des Dampfdruckes des Schlammes liegt. Zur Erwärmung wird Hochtemperatur-Wärme benötigt, die vorteilhafterweise durch Thermalöl bereitgestellt wird.

Vorteilhafterweise weist die Desintegrationsanlage indirekte Wärmetauscher auf, in denen die organische Masse von dem Heizmedium, insbesondere Thermalöl, stofflich getrennt ist. Insbesondere können ausschließlich indirekte Wärmetauscher in der Desintegrationsanlage vorgesehen sein.

Um den Netto-Energiebedarf der Anlage möglichst gering zu halten, kann die Wärmeenergie der hydrolysierten organischen Masse auf die frisch zugeführte organische Masse im stromaufwärtigen Bereich der Desintegrationsanlage übertragen werden. Hierfür werden insbesondere Regenerativ-Wärmetauscher eingesetzt, die entsprechend große Wärmeübergangsflächen besitzen und somit eine hohe Wärmerückgewinnungsrate sicherstellen. Auch dabei handelt es sich um indirekte Wärmetauscher. Damit können die Differenztemperaturen zwischen der Wärmeübertragungswand im Wärmetauscher und der Grenzschicht der organischen Masse minimiert werden, was die Standzeiten erhöht. Folglich kann ein sehr rasches Durchlaufen der Vorwärmstufe ermöglicht werden, um zügig den Temperaturbereich zu erreichen, in dem die Viskosität des Schlammes signifikant reduziert wird, und somit können die Druckverluste minimiert und die Wärmeübergänge verbessert werden.

Die Rückführung von wenigstens teilweise ausgefaulter organischer Masse und/oder die Rückführung von hydrolysierter organischer Masse und Vermischung mit der zugeführten organischen Masse stromaufwärts der Desintegrationsanlage, insbesondere in einem Vorlagebehälter, bewirkt eine Verminderung der Viskosität und trägt damit zur Reduzierung der Druckverluste und Verbesserung der Wärmeübergänge bei, und zwar sowohl in einer optional vorgesehenen Vorwärmstufe, als auch in der thermischen Desintegrationsanlage. Zudem kann durch die höhere Temperatur der rückgeführten organischen Masse eine Erhöhung der Temperatur der neu zugeführten organischen Masse erreicht werden.

Innerhalb der vorgenannten Vorwärmstufe kann die Temperatur des zugeführten Schlammes beispielsweise von ungefähr Umgebungstemperatur, d.h. beispielsweise 20°C, auf über 90°C erhöht werden, und vorteilhafterweise auf über 130°C und insbesondere auf ca. 135°C. Damit muss nachfolgend durch das Thermalöl in der Desintegrationsstufe nur noch eine geringere thermische Energie in das System eingebracht werden, damit die vorteilhafte Reaktionstemperatur von 140°C bis 170°C, und insbesondere von 150°C bis 160°C, erreicht wird.

Die Aufenthaltszeit in der Vorwärmstufe der Desintegrationsanlage beträgt vorteilhafterweise 15 Minuten bis 25 Minuten und insbesondere um die 20 Minuten, vorteilhafterweise ungefähr 22 Minuten. Damit liegt die Verweilzeit in einem niederthermischen Desintegrationstemperaturbereich von 60°C bis 95°C bei unter 6 Minuten.

In einer Ausführungsform wird die organische Masse durch eine Leitung mittels einer Zuführpumpe direkt von einem Vorlagebehälter in die Desintegrationsanlage zugeführt. Bei dieser Pumpe handelt es sich insbesondere um eine Schlammpumpe. Die direkte Zuführung aus dem Vorlagebehälter ermöglicht, dass die Förderstrecke der relativ hochviskosen und ggf. eingedickten organischen Masse kurz gehalten werden kann.

Vorteilhafterweise ist eine Hydrolysatrückführungsleitung vorgesehen, mittels der ein Teil der hydrolysierten organischen Masse vor die Desintegrationsanlage zurückgeführt wird, wobei der nicht zurückgeführte Teil des Hydrolysats dem Faulbehälter zugeführt wird. Die Hydrolysatrückführungsleitung kann ergänzend dazu eingesetzt werden, einen vorgegebenen Durchfluss in der Desintegrationsanlage zu erreichen, d.h. insbesondere kann nicht nur teilweise ausgefaulte organische Masse, sondern auch hydrolysierte organische Masse, zurückgeführt werden, um den gewünschten Durchfluss und Betriebszustand in der Desintegrationsanlage zu erreichen. Weiterhin kann durch das erneute Durchführen wenigstens eines Teils der hydrolysierten organischen Masse durch die Desintegrationsanlage der Hydrolysegrad vor dem Zuführen der hydrolysierten organischen Masse zu dem Faulbehälter erhöht werden.

In einer Ausführungsform des Verfahrens wird zur Reinigung der Anlage eine Reinigungsflüssigkeit, insbesondere Wasser, ggf. mit chemischen Reinigungsmitteln, insbesondere Säure und/oder Lauge, durch die Hydrolysatrückführungsleitung und die Desintegrationsanlage im Kreis gefahren. Die Hydrolysatrückführungsleitung erstreckt sich insbesondere von einer Position stromabwärts der Desintegrationsanlage und stromaufwärts des Faulbehälters bis zu einer Position stromaufwärts der Desintegrationsanlage. Die periodische Spülung der Wärmetauscher der Desintegrationsanlage mit Wasser und/oder die periodische chemische Reinigung sind vorteilhaft um auftretende Inkrustierungen der Wärmetauscherrohre in der Desintegrationsanlage durch Ausfällungen und Anbrand möglichst weitgehend zu entfernen. Der Reinigungseffekt bei der Wasserspülung beruht hauptsächlich auf den durch die turbulente Strömung im Inneren der Wärmetauscherrohre verursachten Scherkräften und gemeinhin weniger auf Rücklösungseffekten. Um den Reinigungseffekt zu verstärken, wird während der Wasserspülung vorteilhafterweise der Anlagendurchsatz gegenüber dem Normalbetrieb deutlich erhöht. Dies ist möglich, da aufgrund der deutlich geringeren Viskosität des Wassers, im Vergleich zu der organischen Masse, auch bei erheblich höherem Durchsatz die Druckverluste innerhalb der Wärmetauscherrohre relativ gering bleiben.

In der Desintegrationsanlage treten insbesondere organische und mineralische Verschmutzungen auf. Die chemische Reinigung der Wärmetauscher wird vorteilhafterweise unter Verwendung von Säure zur Zurücklösung organischer und mineralischer Inkrustierungen durchgeführt. Anbrand an Wärmetauscheroberflächen lässt sich hingegen vorteilhafterweise mit Hilfe von Natronlauge entfernen. Der Einsatz von Säure und Lauge wird insbesondere in aufeinanderfolgenden chemischen Spülvorgängen durchgeführt. Das Reinigungsprogramm läuft insbesondere innerhalb einer manuell gestarteten Schrittkette ab, die aber elektronisch geregelt werden kann. Die Konzentration der Reinigungslösung kann über eine Leitfähigkeitsmessung überwacht werden, wobei diese Information insbesondere zur Regelung des Reinigungsverfahrens verwendet werden kann, und in Abhängigkeit davon eine Dosierung der Reinigungslösung, bzw. der Säure oder Lauge, erfolgen kann.

Durch diese Reinigung kann ein verlässlicher Betrieb einer auf indirekten Wärmetauschern basierenden hochthermischen Desintegrationsanlage ermöglicht werden.

Insbesondere läuft die Reinigung der Desintegrationsanlage nach folgendem Schema ab: Zunächst wird die Zufuhr von frischer organischer Masse zu der Desintegrationsanlage gestoppt. Die in der Desintegrationsanlage befindliche organische Masse wird mit Wasser ausgeschoben, wobei gleichzeitig ein Ventil in der internen Hydrolysatrückführungsleitung geschlossen wird, sodass keine hydrolysierte organische Masse vor die Desintegrationsanlage zurückgeführt wird. Somit gelangt alle der Desintegrationsanlage zugeführte organische Masse in den Faulbehälter. Folglich senkt sich der Füllstand in einem optional vorgesehenen Vorlagebehälter ab.

Sobald ein Minimalfüllstand erreicht ist, wird der Vorlagebehälter mit Wasser befüllt, während die Zufuhrpumpe kontinuierlich weiterarbeitet. Falls kein Vorlagebehälter vorgesehen ist, werden die Leitungen stromaufwärts der Desintegrationsanlage entsprechend mit Wasser befüllt.

Während des weiteren Ausschiebens der organischen Masse aus der Desintegrationsanlage durch Wasser wird die zugeführte Wassermenge gemessen, wobei der Inhalt der Desintegrationsanlage bekannt ist. Sobald die zugeführte Wassermenge wenigstens dem Inhalt der Desintegrationsanlage entspricht, vorteilhafterweise zzgl. eines Sicherheitsaufschlages, kann davon ausgegangen werden, dass sich in der Anlage im Wesentlichen nur noch Wasser befindet.

Dann wird das Ventil der internen Rückführungsleitung geöffnet und gleichzeitig das Zuführventil zum Faulturm geschlossen. Das durch die Pumpe der Desintegrationsanlage zugeführte Wasser wird nun über die Hydrolysatrückführungsleitung wieder vollständig zurück vor die Desintegrationsanlage geführt. Dieser Betriebszustand wird für eine festgelegte Zeit beibehalten und so die Desintegrationsanlage mit Wasser gespült. Danach wird das verschmutzte Wasser analog der vorgenannten Schritte in den Faulturm ausgeschoben.

Nun kann eine Dosierung von Säure und/oder Lauge, vorteilhafterweise direkt in den Vorlagebehälter erfolgen. Vorteilhafterweise wird zunächst Säure dosiert. Die Säurelösung wird wie vorangehend beschrieben ebenfalls durch die interne Rückführungsleitung im Kreis durch die Desintegrationsanlage gefahren und nach einer gewissen Zeit oder bei einem gewissen Verschmutzungsgrad mit Wasser ausgeschoben. Dann erfolgt vorteilhafterweise eine Dosierung von Lauge. Wie in den vorangehenden Schritten beschrieben wird auch die Lauge durch die interne Rückführungsleitung und die Desintegrationsanlage im Kreis gefahren. Nach Abschluss der Laugenreinigung wird allerdings vorteilhafterweise nicht nochmals mit Wasser gespült, sondern die Laugenlösung direkt mit organischer Masse ausgeschoben. Vorteilhafterweise wird die Konzentration des Reinigungsmittels jeweils über eine Leitfähigkeitsmessung überwacht.

Insbesondere wird die rückgeführte wenigstens teilweise ausgefaulte organische Masse stromaufwärts vom Faulbehälter mit frisch zugeführter organischer Masse vermischt. Dies kann insbesondere in einem Vorlagebehälter erfolgen, es ist aber andernfalls auch möglich die Vermischung nur durch eine Zusammenführung von Leitungen zu erreichen.

In einer vorteilhaften Ausführungsform kann frisch zugeführte organische Masse über eine Bypassleitung an der Desintegrationsanlage vorbeigeführt werden und stromabwärts von der Desintegrationsanlage der teilweise hydrolysierten organischen Masse zugeführt werden. Dadurch kann der Hydrolysegrad der dem Faulbehälter zugeführten organischen Masse reduziert werden. Die Bypassleitung ist vornehmlich vorteilhaft, wenn eine Wasserspülung oder chemische Reinigung der Desintegrationsanlage erfolgt, da dann die zu behandelnde frische organische Masse an der Desintegrationsanlage vorbei direkt in den Faulbehälter geführt werden kann, und dort während der Reinigung zwischengespeichert werden kann. Die stromaufwärts von der erfindungsgemäßen Behandlungsvorrichtung vorhandenen Behandlungskomponenten werden somit nicht tangiert, und insbesondere kann beispielsweise ein mechanischer Eindicker und eine ihm vorgeordnete Dünnschlammpumpe weiter betrieben werden. Ohne die Bypassleitung müssten diese Behandlungskomponenten gestoppt werden, oder beispielsweise ein zwischengeschalteter Puffertank vorgesehen werden. Nach Abschluss der Reinigung kann die zwischengespeicherte Masse rückgeführt und behandelt werden.

In einer Ausführungsform kann die wenigstens teilweise ausgefaulte organische Masse aus dem Faulbehälter mittels der Rückführungsleitung entnommen werden und mit frisch zugeführter organischer Masse vermischt werden, wobei ein Teil dieser Mischung direkt in einen Vorlagebehälter oder in die Desintegrationsanlage eingebracht wird, während der andere Teil über eine Umwälzleitung direkt in den Faulbehälter gefördert wird.

Insbesondere handelt es sich bei der frisch zugeführten organischen Masse um Frischschlamm, vornehmlich Dünnschlamm. Der Dünnschlamm stammt insbesondere aus einem Nachklärbecken einer Kläranlage und wird in der Regel in einem Eindicker in seinem Feststoffgehalt erhöht und dann als Dickschlamm der Desintegrationsanlage zugeführt.

Erfindungsgemäß wird weiterhin eine Vorrichtung zur Behandlung von organischer Masse, insbesondere Klärschlamm, bereitgestellt, die eine Desintegrationsanlage für Frischschlamm und einen davon stromabwärts angeordneten Faulbehälter umfasst, wobei erfindungsgemäß eine Rückführungsleitung für wenigstens teilweise ausgefaulte organische Masse vorgesehen ist, und wobei sich die Rückführungsleitung von einer Position stromabwärts des Faulbehälters bis zu einer Position stromaufwärts der thermischen Desintegrationsanlage erstreckt.

Bei der Rückführungsleitung handelt es sich insbesondere um eine direkte Rückführungsleitung, die frei von Behandlungskomponenten, wie z.B. Heizelementen oder Eindickvorrichtungen ist. Vorteilhafterweise handelt es sich bei dem Faulbehälter um einen Faulturm.

Die Desintegrationsanlage besteht vornehmlich ausschließlich aus wenigstens einem indirekten Wärmetauscher oder umfasst diesen. Die Rohre des indirekten Wärmetauschers weisen eine Nennweite von DN20 bis DN60, und insbesondere von DN25 bis DN50 auf. Die Nennweite DN wird nach den DIN ISO 6708 definiert. Die Anlagenauslegung geschieht innerhalb verschiedener Parameter, nämlich insbesondere der erforderlichen Anlagenleistung als Menge an zu behandelnder organischer Masse, der Viskosität der zu behandelnden organischen Masse, des maximalen Druckverlustes innerhalb der Wärmetauscherrohre, und/oder des Wärmeübergangs zwischen dem Heizmedium und der organischen Masse innerhalb der Wärmetauscherrohre.

Mit steigender Viskosität der organischen Masse ergeben sich spezifisch höhere Druckverluste im Wärmetauscher bei gleichzeitig verschlechterten Wärmeübergängen. Die Vergrößerung der Rohrdurchmesser bewirkt zwar eine Verringerung der Druckverluste, jedoch verschlechtern sich dadurch die Wärmeübergänge signifikant. Die vorgenannten Nennweiten der Wärmetauscherrohre ermöglichen einen optimalen Kompromiss aus Wärmeübergang und Druckverlust. Diese Nennweiten gelten aber insbesondere nur für vordefinierte Anlagendurchsätze, die aber erfindungsgemäß durch die Rückführung der wenigstens teilweise ausgefaulten organischen Masse sicher aufrecht erhalten werden können, sodass der Variation der Strömungsgeschwindigkeit in den Wärmetauscherrohren enge Grenzen gesetzt werden können. Damit kann die Strömungsgeschwindigkeit in den Rohren aufrecht erhalten werden und insbesondere können auch schwankende Mengen an frischer organischer Masse ausgeglichen werden.

Vorteilhafterweise ist ein Vorlagebehälter stromaufwärts vor der Desintegrationsanlage angeordnet, wobei die Rückführungsleitung und eine Zuführleitung für frische organische Masse jeweils in den Vorlagebehälter münden. D.h. in dem Vorlagebehälter kann vorteilhafterweise eine Vermischung der frisch zugeführten und rückgeführten organischen Masse erfolgen.

Vorteilhafterweise ist die Rückführungsleitung Teil eines Umwälzkreislaufs, an dem eine Zuführleitung für frische organische Masse stromaufwärts von einer Entnahmeleitung angeordnet ist, wobei die Entnahmeleitung stromaufwärts der Desintegrationsanlage angeordnet ist. Somit kann eine Umwälzung von organischer Masse unter Ausschluss der Desintegrationsanlage erfolgen. Damit kann die Desintegrationsanlage beispielsweise unabhängig gereinigt werden.

Die Erfindung wird nun anhand von exemplarischen Ausführungsformen weitergehend erläutert, die in den folgenden Figuren dargestellt sind.
Figur 1 zeigt eine erste Ausführungsform einer erfindungsgemäßen Vorrichtung zur Behandlung von organischer Masse.
Figur 2 zeigt eine zweite Ausführungsform einer erfindungsgemäßen Vorrichtung zur Behandlung von organischer Masse.

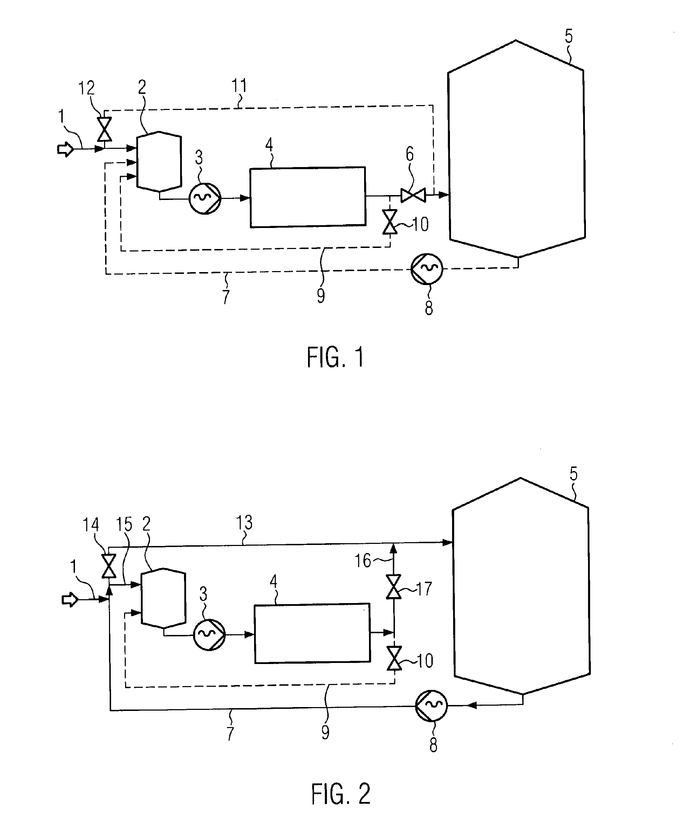

In Figur 1 ist eine Ausführungsform einer erfindungsgemäßen Vorrichtung zur Behandlung von Klärschlamm dargestellt, mit der eine Ausführungsform des erfindungsgemäßen Verfahrens durchgeführt werden kann. Die Vorrichtung weist eine Zuführleitung 1 auf, zur Zuführung von organischer Masse in Form von Frischschlamm zu einem Vorlagebehälter 2. Stromaufwärts der Zuführleitung 1 können Abwasser- oder Schlammbehandlungskomponenten, wie z. B. ein Eindicker vorgesehen sein.

Als Eindicker kann ein mechanischer Eindicker in Form einer Fest-Flüssig-Trennanlage vorgesehen sein. Zusätzlich oder alternativ können dem Frischschlamm in dem Eindicker Polymere zugeführt werden, um dessen Viskosität zu erhöhen. Der Klärschlamm wird insbesondere als Dünnschlamm aus einem Nachklärbecken einer Kläranlage entnommen, und in dem wenigstens einen nicht dargestellten Eindicker zu Dickschlamm umgewandelt. In anderen Ausführungsformen kann sich die dargestellte Vorrichtung auch direkt an ein Nachklärbecken der Kläranlage anschließen, sodass Dünnschlamm behandelt wird.

Aus dem Vorlagebehälter 2 wird die organische Masse dann über eine Zuführpumpe 3 einer Desintegrationsanlage 4 zugeführt, in der eine thermische Hydrolyse, insbesondere bei Temperaturen über 100°C, durchgeführt wird. Die Desintegrationsanlage umfasst wenigstens einen indirekten Wärmetauscher, in dem die organische Masse mittels Thermalöl auf Hydrolysetemperatur erhitzt wird. Stromabwärts der Desintegrationsanlage 4 ist ein Faulbehälter 5 vorgesehen, wobei der Zustrom von hydrolysierter organischer Masse über ein Faulbehälterventil 6 geregelt werden kann. Insbesondere ermöglicht das Faulbehälterventil 6 den Zufluss zum Faulbehälter 5 zu unterbrechen, wenn eine Reinigung der Desintegrationsanlage 4 erfolgt. Stromaufwärts in der Desintegrationsanlage 4 kann wenigstens ein Heizelement einer Vorwärmstufe vorgesehen sein, und stromabwärts in der Desintegrationsanlage 4 kann wenigstens ein Kühlelement einer Kühlstufe vorgesehen sein. Die Heiz- und Kühlelemente können ebenfalls als indirekte Wärmeaustauscher ausgeführt sein und über einen Wärmemittelkreislauf verbunden sein, sodass Wärme in der Kühlstufe zurückgewonnen werden kann und zum Vorheizen der organischen Masse in der Vorwärmstufe verwendet werden kann.

Erfindungsgemäß ist stromabwärts des Faulbehälters eine Rückführungsleitung 7 vorgesehen, die teilweise oder vollständig ausgefaulte organische Masse, aus dem Faulbehälter 5 entnimmt und vor die thermische Desintegrationsanlage 4 zurückführt. Insbesondere kann die Rückführungsleitung 7 in einem Bodenbereich des Faulbehälters 5 angeschlossen sein. Die Rückführungsleitung 7 ist mit einer Rückführungspumpe 8 versehen, die ermöglicht, die wenigstens teilweise ausgefaulte organische Masse vor die Desintegrationsanlage 4 zu fördern. Die Rückführungspumpe 8 kann mit einem Sperrventil versehen sein, das es ermöglicht die Rückführungsleitung 7 zu schließen. Alternativ kann dieses Sperrventil auch als separates Bauteil vor oder nach der Rückführungspumpe 8 vorgesehen sein.

Weiterhin ist in der Ausführungsform gemäß Figur 1 eine Hydrolysatrückführungsleitung 9 vorgesehen, die sich von einer Position zwischen der Desintegrationsanlage 4 und dem Faulbehälterventil 6 bis zu einer Position stromaufwärts der Desintegrationsanlage 4 erstreckt. Insbesondere erstreckt sich die Hydrolysatrückführungsleitung 8 bis zu dem Vorlagebehälter 2. Die Hydrolysatrückführungsleitung 9 ist mit einem Hydrolysatrückführungsventil 10 versehen, das es ermöglicht die Hydrolysatsrückführungsleitung 9 abzuschließen. Insbesondere kann es sich bei dem Hydrolysatrückführungsventil 10 um ein regelbares Ventil handeln, mit dem vorbestimmte Mengen an hydrolysierter organischer Masse rückgeführt werden können. Zusätzlich zu dem Hydrolysatrückführungsventil 10 kann auch eine nicht dargestellte Hydrolysatrückführungspumpe vorgesehen sein.

Somit weist die Ausführungsform in Figur 1 eine interne Rück- bzw. Kreislaufführung mittels der Hydrolysatrückführungsleitung 9 und eine externe Rück- bzw. Kreislaufführung mittels der Rückführungsleitung 7 auf.

Die Durchflüsse durch die Rückführungsleitungen 7 und 9 können so geregelt werden, dass ein vorgegebener Durchfluss in der Desintegrationsanlage 4 erreicht wird, was insbesondere ermöglicht, einen statischen Betriebszustand in der Desintegrationsanlage 4 zu erreichen. Somit können vorteilhafte Bedingungen in der Desintegrationsanlage geschaffen werden, damit einerseits eine effiziente Hydrolyse durchgeführt werden kann und andererseits die Gefahr von Anbrand und Ablagerungen reduziert werden kann.

Weiterhin kann bei einem Ausfall von Vorrichtungen stromaufwärts der erfindungsgemäßen Vorrichtung dennoch ein Betrieb der Desintegrationsanlage durch Kreisführung insbesondere über die Rückführungsleitung 7 aufrechterhalten werden, bis das Problem behoben wurde oder die Desintegrationsanlage 4 geregelt heruntergefahren wurde. Diese Kreisführung hat insbesondere den Vorteil, dass der Faulbehälter 5 und die darin enthaltene organische Masse einen Temperaturspeicher bildet, sodass eine Überhitzung der organischen Masse, die insbesondere zu Anbrand aber auch beispielsweise zu einer Beschädigung der Zuführpumpe 3 führen könnte, verhindert wird. Für diesen Kreisbetrieb wird insbesondere das Ventil 10 geschlossen, das Ventil 6 geöffnet und die Pumpen 3 und 8 auf gleiche Fördermenge eingestellt.

Während des normalen Betriebs kann eine Rückführung von teilweise ausgefaulter organischer Masse über die Rückführungsleitung 7 und eine erneute thermische Hydrolyse derselben in der Desintegrationsanlage 4 eine verbesserten Verwertung der organischen Masse und somit beispielsweise eine erhöhte Biogasausbeute ermöglichen.

Weiterhin ist in Figur 1 eine Bypassleitung 11 mit einem Bypassventil 12 vorgesehen. Selbstverständlich kann das Bypassventil 12 in anderen Ausführungsformen durch eine Bypasspumpe ersetzt oder ergänzt werden. Die Bypassleitung 11 ermöglicht eine Führung von frisch zugeführter organischer Masse parallel zur thermischen Desintegrationsanlage 4. Dafür erstreckt sich die Bypassleitung 11 von stromaufwärts der Desintegrationsanlage 4 bis zu einer Position stromabwärts der Desintegrationsanlage 4. Insbesondere erstreckt sich die Bypassleitung 11 von einer Position stromaufwärts des Vorlagebehälters 2 zu einer Position stromabwärts des Faulbehälterventils 6.

Die Vorrichtung gemäß Figur 1 ermöglicht, dass Wasser oder eine Reinigungsflüssigkeit über die Hydrolysatrückführungsleitung 9 zirkuliert werden kann, während der Faulbehälter 5 durch das Faulbehälterventil 6 abgesperrt ist. Die Bypassleitung 11 ermöglicht, dass während dieser Reinigung die Desintegrationsanlage 4 entkoppelt werden kann, sodass die stromaufwärts angeordneten Behandlungskomponenten nicht angehalten werden müssen. Andernfalls müsste ein entsprechend groß dimensionierter und kostenintensiver Speicherbehälter mit zusätzlicher Förderpumpe in den Vorlagebehälter 2 installiert werden. Erfindungsgemäß kann die organische Masse aber zunächst direkt in den Faulbehälter 5 geführt werden und dann über die Rückführungsleitung 7 nach Abschluss der Reinigung zurückgeführt und der Desintegrationsanlage 4 zugeführt werden. Die Rückführungsleitungen 7 und 9 ermöglichen eine Rückführung von Hydrolysat und Faulschlamm in den Vorlagebehälter 2, und somit kann auch während des normalen Betriebs ohne notwendige Kopplung der stromaufwärts angeordneten Behandlungskomponenten, z. B. des mechanischen Eindickers, der Betrieb der Desintegrationsanlage 4 optimiert werden, insbesondere bzgl. der Durchsatzleistung, der darin auftretenden Druckverluste, des Wärmeübergangs und der Viskosität der organischen Masse darin.

Bei der Zuführpumpe 3 handelt es sich insbesondere um eine kosteneffiziente Standard-Exzenterschneckenpumpe. Die Funktion dieser Pumpe wird in aller Regel über Drucksensoren auf der Ausgangsseite sowie Temperatursensoren im Stator überwacht. Eine Notabschaltung der Zuführpumpe 3 erfolgt insbesondere bei einer Temperatur von über 60°C. Würde im Falle eines Ausfalls der stromaufwärts gelegenen Anlageteile ausschließlich hydrolysierte organische Masse über die Hydrolysatsrückführungsleitung 9 rückgeführt, käme es auf Grund der hohen Temperatur der hydrolysierten organischen Masse bereits innerhalb kürzester Zeit zu einer überhöhten Temperatur in der Zuführpumpe 3 und damit zu einem Not-Abschalten derselben.

Auf Grund des hohen Automatisierungsgrades wird die erfindungsgemäße Vorrichtung in kommunalen Kläranlagen oft nur einschichtig mit einem Notdienst am Wochenende und Feiertagen betrieben. Somit beträgt die Reaktionszeit beispielsweise bei einem Ausfall der mechanischen Eindickung stromaufwärts der erfindungsgemäßen Vorrichtung bei bis zu über 12 Stunden. Würde die Zufuhrpumpe 3 nun notabgeschaltet werden, würde dies auch zu einem Ausfall der Desintegrationsanlage 4 führen. Allerdings ist es zeitintensiv die Desintegrationsanlage wieder anzufahren, da im Normalbetrieb über die vorgenannten Vorwärm- und Kühlstufen eine hohe Wärmerückgewinnungsrate realisiert wird, sodass ein erneutes Aufheizen ohne Wärmerückgewinnung zeit- und energieintensiv ist, wodurch ein langer und teurer Ausfall der Vorrichtung verursacht wird. Deswegen ist für den stabilen und sicheren Betrieb eine Kombination aus interner und externer Rückführung vorteilhaft.

Der gewünschte Mengenfluss der externen Rückführung über die Rückführungsleitung 7 kann beispielsweise über die Temperatur im Vorlagebehälter bestimmt und gesteuert werden.

In Figur 2 ist eine alternative Ausführungsform der erfindungsgemäßen Vorrichtung dargestellt. Hier ist die Rückführungsleitung 7 mit einer Umwälzleitung 13 kombiniert, deren

Durchfluss über ein Umwälzleitungsventil 14 geregelt werden kann. Die Zuführung von organischer Masse über die Zuführleitung 1 erfolgt hier in die Rückführungsleitung 7. Stromabwärts von der Zuführungsleitung 1 wird mittels einer Entnahmeleitung 15 die frisch zugeführte organische Masse, bei Betrieb der Rückführungsleitung 7 vermischt mit wenigstens teilweise ausgefaulter organischer Masse, dem Vorlagebehälter 2 zugeführt.

Wird nun das Umwälzleitungsventil 14 geöffnet, fließt wenigstens ein Teil der organischen Masse direkt über die Umwälzleitung 13 in den Faulbehälter 5. Dies ermöglicht wiederum eine Entkopplung der Desintegrationsanlage 4, insbesondere zur Reinigung. Ansonsten wird die organische Masse über die Entnahmeleitung 15 in den Vorlagebehälter 2 zugeführt, dort ggf. mit über die Hydrolysatrückführungsleitung 9 rückgeführter hydrolysierter organischer Masse vermischt, über eine Zuführpumpe 3 der thermischen Desintegrationsanlage 4 zugeführt und darin thermisch hydrolysiert. Die hydrolysierte organische Masse wird dann über eine Hydrolysatleitung 16 zum Faulbehälter 5 geleitet.

Für die Reinigung der thermischen Desintegrationsanlage wird ein Hydrolysatleitungsventil 17 geschlossen und das Hydrolysatrückführungsventil 10 geöffnet, sodass durch den Vorlagebehälter 2, die Zuführpumpe 3 und die Desintegrationsanlage 4 Wasser oder eine Reinigungsflüssigkeit zirkuliert werden können. Gleichzeitig wird der Vorrichtung zugeführter Frischschlamm über die Umwälzleitung 13 direkt in den Faulbehälter 5 geführt.

Die Rückführungspumpe 8 ermöglicht die Durchmischung des Faulbehälters 5.

Weiterhin kann durch die Umwälzung eine Beheizung des Faulschlamms erfolgen, wobei dafür ein nicht dargestelltes Heizelement in der Umwälzleitung 13 vorgesehen sein kann, das ausgelegt ist, die organische Masse auf 35°C bis 55°C aufzuheizen, sodass deren Temperatur im mesophilen oder thermophilen Temperaturbereich liegt.

Die Rückführungspumpe 8 kann insbesondere mit konstanten Fördervolumen fördern, sodass sich in der Umwälzleitung 13, abhängig von der Zuführmenge an Frischschlamm über die Zuführleitung 1, ein variables Mischungsverhältnis von Frischschlamm und Faulschlamm einstellt, das dann ohne weitere Regelung in den Vorlagebehälter 2 eingebracht und über die Zuführpumpe 3 der Desintegrationsanlage 4 zugeführt werden kann. Der Aufwand für die Regelung der externen Rückführung lässt sich somit deutlich vermindern.

Die externe Rückführung durch die Rückführungsleitung 7 wird insbesondere in Abhängigkeit des Füllstands im Vorlagebehälter 2 geregelt. Das heißt in Abhängigkeit des Füllstands des Vorlagebehälters 2 kann die Mengenleistung der Rückführungspumpe 8 eingestellt werden. Falls kein Vorlagebehälter vorgesehen wird, ist es auch möglich, dass das System selbstregelnd ausgestaltet wird, nämlich dass der Fluss in der Rückführungsleitung 7 durch den Saugdruck vor der Zuführpumpe 3 geregelt wird.

## Patentansprüche

1. Verfahren zur Behandlung von organischer Masse, insbesondere Klärschlamm, umfassend:
- Zuführen der organischen Masse zu einer Desintegrationsanlage (4),
- Thermische Hydrolyse der organischen Masse in der Desintegrationsanlage (4),
- Zuführen der hydrolysierten organischen Masse zu einem Faulbehälter (5), in dem die organische Masse wenigstens teilweise ausfault, und
- Rückführung wenigstens eines Teils der wenigstens teilweise ausgefaulten organischen Masse durch eine Rückführungsleitung (7) vor die Desintegrationsanlage (4).

2. Verfahren nach Anspruch 1, wobei die Rückführung so geregelt wird, dass ein vorgegebener Durchfluss in der Desintegrationsanlage (4) erreicht wird, so dass insbesondere ein statischer Betriebszustand in der Desintegrationsanlage (4) vorliegt.

3. Verfahren nach Anspruch 1 oder 2, wobei der Durchfluss in der Desintegrationsanlage (4) eine Strömungsgeschwindigkeit von 0,4 Meter pro Sekunde bis 1,5 Meter pro Sekunde aufweist.

4. Verfahren nach einem der vorangehenden Ansprüche, wobei in der Desintegrationsanlage (4) eine hochthermische Hydrolyse bei Temperaturen über 100°C durchgeführt wird.

5. Verfahren nach einem der vorangehenden Ansprüche, wobei zusätzlich eine Hydrolysatrückführungsleitung (9) vorgesehen ist, mittels der zumindest ein Teil der hydrolysierten organischen Masse vor die Desintegrationsanlage (4) zurückgeführt werden kann, wobei der nicht rückgeführte Teil der hydrolysierten organischen Masse dem Faulbehälter (5) zugeführt wird.

6. Verfahren nach Anspruch 5, wobei zur Reinigung der Anlage eine Reinigungsflüssigkeit, insbesondere Wasser, gegebenenfalls mit chemischen Reinigungsmitteln, insbesondere Säure und/oder Lauge, durch die Hydrolysatrückführungsleitung (9) und die Desintegrationsanlage (4) im Kreis gefahren wird.

7. Verfahren nach Anspruch 6, wobei vor der Reinigung die Zufuhr von frischer organischer Masse zu der Desintegrationsanlage (4) gestoppt wird, und die in der Desintegrationsanlage (4) befindliche organische Masse mit Wasser in den Faulbehälter (5) ausgeschoben wird.

8. Verfahren nach Anspruch 7, wobei die Konzentration des Reinigungsmittels über eine Leitfähigkeitsmessung überwacht wird.

9. Verfahren nach einem der vorangehenden Ansprüche, wobei die rückgeführte wenigstens teilweise ausgefaulte organische Masse mit frisch zugeführter organischer Masse vermischt wird.

10. Verfahren nach einem der vorangehenden Ansprüche, wobei frisch zugeführte organische Masse über eine Bypassleitung (11) an der Desintegrationsanlage (4) vorbei geführt wird und stromabwärts von der Desintegrationsanlage (4) der teilweise hydrolysierten organischen Masse zugeführt wird.

11. Verfahren nach einem der Ansprüche 1 bis 9, wobei wenigstens teilweise ausgefaulte organische Masse aus dem Faulbehälter (5) mittels der Rückführungsleitung (7) entnommen und mit frisch zugeführter organischer Masse vermischt wird, und ein Teil davon direkt in einen Vorlagebehälter (2) oder die Desintegrationsanlage (4) eingebracht wird, während der andere Teil über eine Umwälzleitung (13) direkt in den Faulbehälter (5) gefördert wird.

12. Vorrichtung zur Behandlung von organischer Masse, insbesondere Klärschlamm, umfassend:
eine Desintegrationsanlage (4) und einen davon stromabwärts angeordneten Faulbehälter (5),
**gekennzeichnet durch**
eine Rückführungsleitung (7) für wenigstens teilweise ausgefaulte organische Masse, wobei die Rückführungsleitung (7) sich von stromabwärts des Faulbehälters (5) bis stromaufwärts der thermischen Desintegrationsanlage (4) erstreckt.

13. Vorrichtung nach Anspruch 12, wobei die Desintegrationsanlage (4) einen indirekten Wärmetauscher umfasst, in dem Rohre für die organische Masse mit einer Nennweite von DN 20 bis DN 60, insbesondere von DN 25 bis DN 50, vorgesehen sind.

14. Vorrichtung nach Anspruch 12 oder 13, wobei ein Vorlagebehälter (2) stromaufwärts vor der Desintegrationsanlage (4) angeordnet ist, und wobei die Rückführungsleitung (7) und eine Zuführleitung (1) für frische organische Masse jeweils in den Vorlagebehälter (2) münden.

15. Vorrichtung nach Anspruch 12 oder 13, wobei die Rückführungsleitung (7) Teil eines Umwälzkreislaufs ist, an dem eine Zuführleitung (1) für frische organische Masse stromaufwärts von einer Entnahmeleitung (15) angeordnet ist, und wobei die Entnahmeleitung (15) stromaufwärts der Desintegrationsanlage (4) angeordnet ist.
